# EUROPEAN PATENT SPECIFICATION

(11) **EP 4 128 863 B1**
(45) Date of publication and mention of the grant of the patent: **01.01.2025**
(21) Application number: 21702686.3
(22) Date of filing: 05.02.2021
(51) Int. Cl.: H04W 24/02, H04W 40/22, H04W 92/20

(54) **CELLULAR TELECOMMUNICATIONS NETWORK**
ZELLULARES TELEKOMMUNIKATIONSNETZWERK
RÉSEAU DE TÉLÉCOMMUNICATIONS CELLULAIRES

(30) Priority: 25.03.2020 EP 20165488; 25.03.2020 GB 202004300
(43) Date of publication of application: 08.02.2023
(60) Divisional application: 22214272.1
(73) Proprietor: British Telecommunications public limited company, London E1 8EE (GB)
(72) Inventor: DIAZ SENDRA, Salvador, London EC4V 5BT (GB)
(74) Representative: British Telecommunications public limited company Intellectual Property Department
(86) International application number: PCT/EP2021/052814
(87) International publication number: WO 2021/190811

(56) References cited:
- US-A1- 2011 274 030
- US-A1- 2015 373 665
- SHARP: "Information exchange over a wireless X2 interface between relay nodes", 3GPP DRAFT; R2-092827, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090427, 27 April 2009 (2009-04-27), XP050340660
- HUAWEI: "CoMP scenarios", 3GPP DRAFT; R2-095819 COMP SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390302
- NEW POSTCOM: "The X2 interface necessity in Relay architecture", 3GPP DRAFT; R3-092181 X2 NECESSITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050391731
- QUALCOMM EUROPE: "Techniques to Maximize Type I Relay Gains", 3GPP DRAFT; R1-094892 TECHNIQUES TO MAXIMIZE TYPE I RELAY GAINS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389261
- HUAWEI: "X2 interface analysis for relay", 3GPP DRAFT; R3-092772 RELAY X2 INTERFACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050392274
- ZTE: "Load information reporting mechanism over X2 interface", 3GPP DRAFT; R3-101546, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20100510, 1 May 2010 (2010-05-01), XP050425301
- CMCC: "Summary of first round of email discussion about Scenarios & Requirements", vol. TSG RAN, no. Barcelona, Spain; 20121210 - 20121212, 14 November 2012 (2012-11-14), XP051633531, Retrieved from the Internet <URL:http://www.3gpp.org/ftp/tsg%5Fran/TSG%5FRAN/TSGR%5F58/Docs/RP%2D121462%2Ezip> [retrieved on 20121114]
- IAESI ET AL: "Impact of the xDSL backhaul delays on X2-based ICIC operation", vol. RAN WG1, no. St. Julian, 23 January 2013 (2013-01-23), XP050663925, Retrieved from the Internet <URL:http://www.3gpp.org/ftp/tsg_ran/WG1_RL1/TSGR1_72/Docs/> [retrieved on 20130123]
- MITSUBISHI ELECTRIC: "Neighbour Discovery and Neighbour Management with Relays", 3GPP DRAFT; R3-101620 (RELAYNEIGHBOURDISCOVERY), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20100510 - 20100514, 1 May 2010 (2010-05-01), XP050610161
- SASKEN COMMUNICATION TECHNOLOGIES LTD: "WLAN Inter Access Point Protocol considerations for WLAN-UMTS interworking", 3GPP DRAFT; S2-021848, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali, Finland; 20020701, 1 July 2002 (2002-07-01), XP050239231
- STEPHEN SHEW CIENA CANADA EDITOR G 800: "Draft revised Recommendation ITU-T G.800 (for Consent, 26 February 2016);TD 462 Rev.1 (PLEN/15)", ITU-T DRAFT ; STUDY PERIOD 2013-2016, INTERNATIONAL TELECOMMUNICATION UNION, GENEVA ; CH, vol. 12/15, 21 February 2016 (2016-02-21), pages 1 - 79, XP044165665

## Description

### Field of the Invention

The present invention relates to a cellular telecommunications network.

### Background

In a cellular telecommunications network, overall capacity may be improved by increasing the density of base station deployment. However, there is an associated capital expense in providing both the additional base station equipment and the wired links connecting the additional base stations with the core network (the "backhaul"). To reduce the backhaul expenditure, access connections may be provided by relay nodes which utilise a wireless backhaul link to the core network (via a "donor" base station). Such relay nodes have become part of the 4G standards. One limitation of these 4G relay nodes is that there may only be a single relay node between the User Equipment (UE) and the donor base station (i.e. they are "single-hop").

In 5G, relay nodes are called "Integrated Access and Backhaul" (IAB) nodes and the donor base station is called the donor lAB. 5G networks may also employ multi-hop architectures so that multiple IAB nodes may exist between the UE and the donor lAB.

Collectively, any form of networking node that may provide an access connection in a cellular telecommunications network may be known as an Access Point (AP). This term includes the base station, donor base station, relay node, IAB node and donor lAB described above.

Cellular telecommunications networks also utilise inter-AP messaging protocols, such as X2 in 4G and Xn in 5G. These protocols allow connections to be established between APs (directly or indirectly) in order to exchange messages concerning mobility management, load management and various configuration parameters. The donor base station in 4G networks or the donor lAB in 5G networks are responsible for routing the inter-AP messages (or have a connection to a gateway node providing such functionality), including for inter-AP messages originating from any relay node or IAB node that they serve.

US Patent Application Publication No. 2011/274030 A1 provides a method and an apparatus for establishing a connection between evolved Node Bs (eNBs).

### Summary of the Invention

According to a first aspect of the invention, there is provided a method as claimed in Claim 1.

The second neighbouring AP may be the destination of the inter-AP message or a first neighbour of the second neighbouring AP.

The method may further comprise the steps of discovering the second neighbouring AP; identifying the first neighbour of the second neighbouring AP; recording an association between the second neighbouring AP and the first neighbour of the second neighbouring AP, wherein the step of identifying the second neighbouring AP based on the destination of the inter-AP message utilises the recorded association between the second neighbouring AP and the first neighbour of the second neighbouring AP.

The method may further comprise the steps of: detecting a termination of an inter-AP connection between the second neighbouring AP and a second neighbour of the second neighbouring AP; and responsive to the detection, updating a recorded association between the second neighbouring AP and the second neighbour of the second neighbouring AP.

According to a second aspect of the invention, there is provided a computer program comprising instructions which, when the program is executed by a computer, cause the computer to carry out the steps of the first of the invention. The computer program may be stored on a computer readable carrier medium.

According to a third aspect of the invention, there is provided an Access Point, AP, in a cellular telecommunications network having a transceiver, memory and a processor configured to cooperate to carry out the steps of the first aspect of the invention.

### Brief Description of the Figures

In order that the present invention may be better understood, embodiments thereof will now be described, by way of example only, with reference to the accompanying drawings in which:
Figure 1 is a schematic diagram of an embodiment of a cellular telecommunications network of the present invention;
Figure 2 is a schematic diagram of a donor Integrated Access and Backhaul (IAB) of the network of Figure 1;
Figure 3 is a schematic diagram of an IAB node of the network of Figure 1;
Figure 4 is a flow diagram illustrating a message transfer process of an embodiment of a method of the present invention;
Figure 5 is a schematic diagram of the network of Figure 1 following introduction of a fifth IAB node; and
Figure 6 is a flow diagram illustrating a routing table update process of the embodiment of the method of the present invention.

### Detailed Description of Embodiments

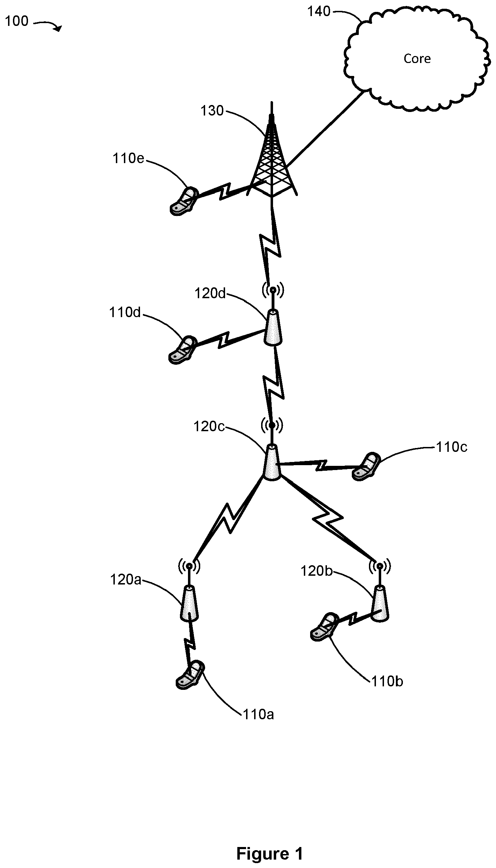

A first embodiment of a cellular telecommunications network 100 of the present invention will now be described with reference to Figures 1 to 3. Figure 1 illustrates a cellular telecommunications network 100 including a plurality of User Equipment (UE) 110a...110e, a plurality of Integrated Access and Backhaul (IAB) nodes 120a... 120d, a donor lAB 130 and a core network 140, all operating according to the 5^{th} Generation (5G) cellular telecommunications protocol as standardised by the 3^{rd} Generation Partnership Project (3GPP). The IAB nodes 120a... 120d are connected in a multi-hop relay architecture so that a first IAB node 120a and second IAB node 120b communicate with the donor lAB 130 via intermediate IAB nodes (the third IAB node 120c and fourth IAB node 120d).

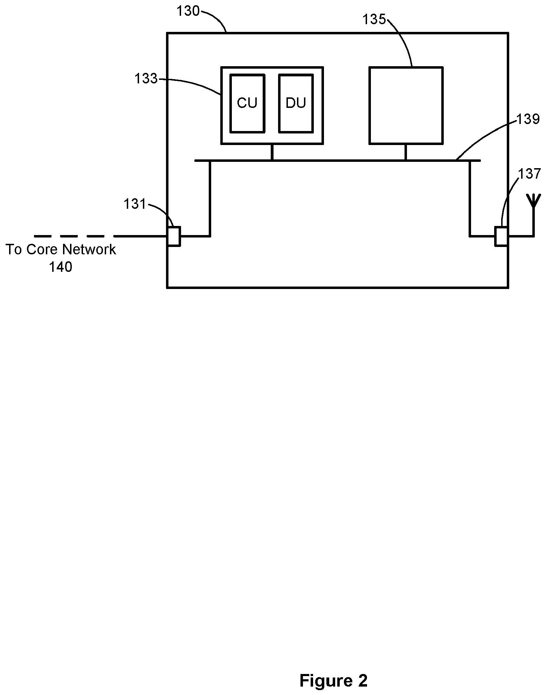

The donor lAB 130 is shown in more detail in Figure 2. The donor lAB 130 includes a first communications interface 131 for wired communications (e.g. via optical fibre) to the core network 140, a processor 133, memory 135, and a second communications interface 137 for wireless communications (e.g. via an antenna), all connected via bus 139. The second communications interface 137 is for providing an access connection to one or more UE (such as a fifth UE 110e of the plurality of UE), and for providing a wireless backhaul connection to one or more IAB nodes (such as the fourth lAB node 120d). As shown in Figure 2, the processor 133 of the donor lAB 130 includes both a Centralised Unit (CU) (providing Radio Resource Control (RRC) and Packet Data Convergence (PDC) functionality) and a Distributed Unit (DU) (providing Radio Link Control (RLC) and Medium Access Control (MAC) functionality) for processing packets communicated via the first or second communications interfaces 131, 137.

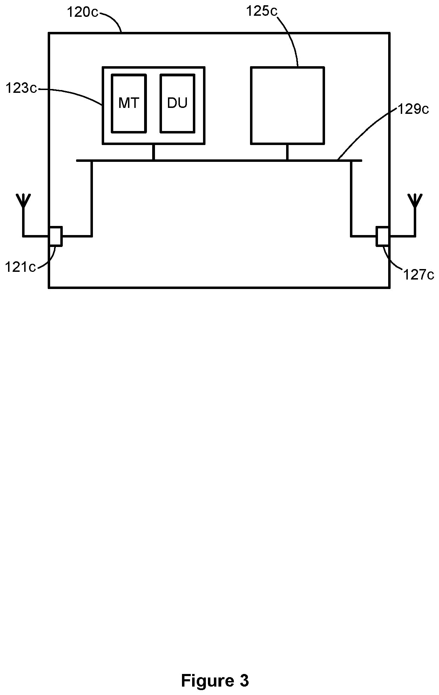

A third IAB node 120c of the plurality of IAB nodes is shown in more detail in Figure 3. The third IAB node 120c includes a first communications interface 121c for wireless communications (e.g. via an antenna), a processor 123c, memory 125c, and a second communications interface 127c for wireless communications (e.g. via an antenna), all connected via bus 129c. The first communications interface 121c is for providing a wireless backhaul connection to the fourth IAB node 120d. The second communications interface 127c is for providing a wireless access connection to one or more UE (such as the third UE 110c of the plurality of UE) and for providing a wireless backhaul connection to the first and second IAB nodes 120a, 120b. As both the first and second communications interfaces may be utilised for wireless backhaul connections but in opposing directions, the first communications interface 121c to a wireless backhaul connection to the fourth IAB node 120d shall hereinafter be referred to as an upstream wireless backhaul connection (as it is for communications from the third IAB node 120c to upstream network nodes such as the fourth IAB node 120d or the core network 140) and the second communications interface 127c to a wireless backhaul connection to the first and second IAB nodes 120a, 120b shall hereinafter be referred to as a downstream wireless backhaul connection (as it is for communications from the third IAB node 120c to downstream network nodes such as the first and second IAB nodes 120a, 120b).

The processor 123c of the third IAB node 120c includes a Distributed Unit (DU) (providing Radio Link Control (RLC) and Medium Access Control (MAC) functionality) for processing packets communicated via the first or second communications interfaces 121c, 127c, and further includes a Mobile Termination (MT) part for communications via the upstream wireless backhaul connection (to the DU part of the fourth lAB node 120d).

The first, second and fourth IAB nodes 120a, 120b, 120d are substantially the same as the third IAB node 120c, and the terms upstream/downstream wireless backhaul connections for these IAB nodes refer to the upstream/downstream directions from the perspective of each IAB node (that is, the upstream wireless backhaul connection for the first IAB node 120a is towards the third IAB node 120c, the upstream wireless backhaul connection for the second IAB node 120b is towards the third IAB node 120c, the upstream wireless backhaul connection for the fourth IAB node 120d is towards the IAB donor 130, and the downstream wireless backhaul connection for the fourth IAB node 120d is towards the third lAB node 120c).

The donor lAB 130 and the IAB nodes 120a... 120d are all configured to establish an inter-Access Point (inter-AP) connection (in this embodiment, an Xn connection) with any other donor IAB or IAB node that they may connect with (directly or indirectly). Furthermore, the donor lAB 130 and each lAB node of the plurality of IAB nodes 120a... 120d store (in their respective memory modules) a routing table listing each neighbouring node it has an established inter-AP connection with (i.e. an established Xn connection). For each of these neighbouring nodes, the routing table further identifies an Internet Protocol (IP) address for the neighbouring node, an identifier for the parent node of the neighbouring node, and an identifier for each child node of the neighbouring node. In this context, a parent node is either a donor lAB or IAB node that the neighbouring node is directly connected to via its upstream wireless backhaul connection, whilst a child node is either a donor lAB or IAB node that the neighbouring node is directly connected to via its downstream wireless backhaul connection. The process of updating the routing table will be described in more detail below.

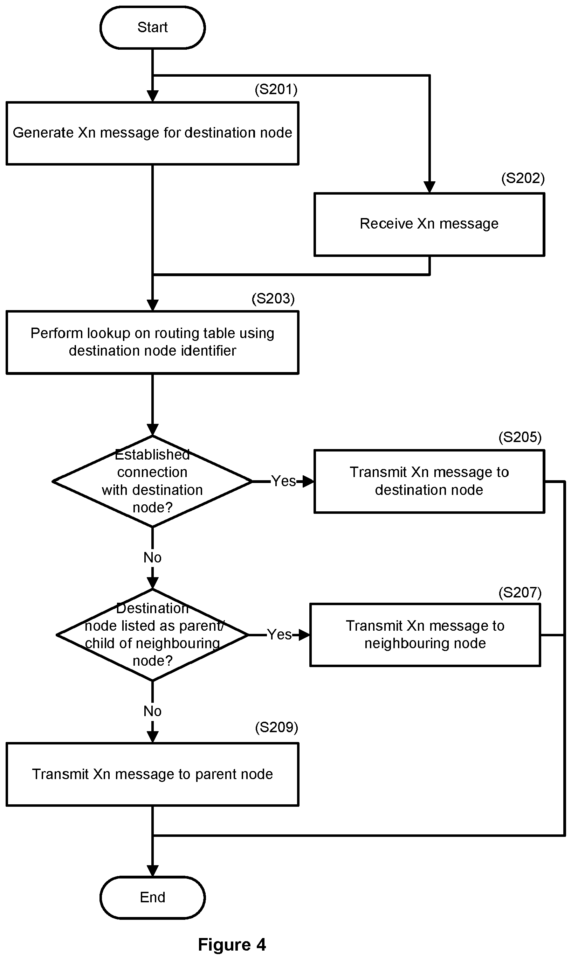

An embodiment of a method of the present invention will now be described. This method includes several processes, including a message transport process and a routing table update process. The message transport process will now be described with reference to Figures 1 and 4.

The cellular telecommunications network 100 is initially in the state as shown in Figure 1 and Xn connections have been established between:
- The first IAB node 120a and the third IAB node 120c;
- The second IAB node 120b and the third IAB node 120c;
- The third IAB node 120c and the fourth IAB node 120d; and
- The fourth IAB node 120d and the IAB donor 130.

The routing table of the first IAB node 120a includes the following data (following the update process described below):

**Table 1: Routing table of first IAB node 120a**

| **Neighbouring Node** | **IP Address of Neighbouring Node** | **Parent Node of Neighbouring Node** | **Child Node(s)** of **Neighbouring Node** |
|---|---|---|---|
| Third IAB node 120c | IP_{120c} | Fourth IAB node 120d | First IAB node 120a; |
| | | | Second IAB node 120b |

The routing table of the third IAB node 120c includes the following data (following the update process described below):

**Table 2: Routing table of third IAB node 120c**

| **Neighbouring Node** | **IP Address of Neighbouring Node** | **Parent Node of Neighbouring Node** | **Child Node(s)** of **Neighbouring Node** |
|---|---|---|---|
| First IAB node 120a | IP₁₂₀ₐ | Third IAB node 120c | NULL |
| Second IAB node 120b | IP_{120b} | Third IAB node 120c | NULL |
| Fourth IAB node 120d | IP_{120d} | IAB donor 130 | Third IAB node 120c |

In a first step of the message transport process (S201), as shown in the flow diagram of Figure 4, the first IAB node 120a generates an Xn message destined for the second IAB node 120b. In step S203, the first IAB node 120a performs a lookup on its routing table to determine whether the first IAB node 120a has an established Xn connection with the second IAB node 120b (that is, it is listed as a neighbouring node in the routing table) or whether the second IAB node 120b is a parent or child node of a neighbouring node listed in the routing table. In this embodiment, the first IAB node 120a does not have an established Xn connection with the second IAB node 120b but the second IAB node 120b is identified as a child node of the third IAB node 120b. In response (in step S207), the first IAB node 120a transmits the Xn message to the third IAB node 120c.

On receipt of the Xn message from the first IAB node 120a (step S202), the third IAB node 120c similarly performs step S203 to perform a lookup on its routing table to determine whether it has an established Xn connection with the second IAB node 120b or, if not, whether the second IAB node 120b is a parent or child node of a neighbouring node listed in the routing table. As the third IAB node 120c does have an established Xn connection with the second IAB node 120b, the third IAB node 120c responds (in step S205) by transmitting the Xn message to the second IAB node 120b.

The second IAB node 120b therefore receives the Xn message and processes it in its normal way.

The above process enables IAB nodes to route inter-AP messages towards their destination. Without this functionality, the IAB node generating the Xn message (the first IAB node 120a) must forward it to the donor lAB 130 so that the Xn message may be forwarded to the destination node (the second IAB node 120b). In this example, the Xn message would have had to be forwarded via the constituent wireless backhaul connections between the first IAB node 120a and the IAB donor 130 (that is, between the first IAB node 120a and the third IAB node 120c, between the third IAB node 120c and fourth IAB node 120d, and between the fourth IAB node 120d and the donor lAB 130). However, by implementing the above process, the Xn message may be forwarded by the third IAB node 120c to the second IAB node 120b, without any interaction of the fourth IAB node 120d or donor lAB 130 and without using the respective wireless backhaul connections between the third IAB node 120c, fourth IAB node 120d and donor lAB 130. The above process therefore frees up capacity on these wireless backhaul connections which would otherwise be wasted forwarding these Xn messages to the donor lAB 130. Furthermore, as these multi-hop architectures may result in a tree structure with further IAB node branches (such as if the third and/or fourth IAB node 120c, 120d had one or more other child lAB nodes) and Xn messages originating within these IAB node branches must also be forwarded up to the IAB donor 130, then any wireless backhaul connection that serves multiple IAB node branches will be significantly burdened. The above process therefore has a more significant benefit for wireless backhaul connections serving multiple IAB node branches.

In another example of the above process in which the first IAB node 120a generates a message destined for a destination IAB node which is not identified in either the first IAB node's routing table or third IAB node's routing table (either as a neighbouring node with which they have an established Xn connection or a parent/child node of such a neighbouring node), then the first IAB node 120a and third IAB node 120c forward the Xn message towards the IAB donor 130 (step S209). If the fourth IAB node's routing table identifies this destination IAB node, then it may process it according to the steps of the above process. If not, then the Xn message is eventually received and processed by the IAB donor 130.

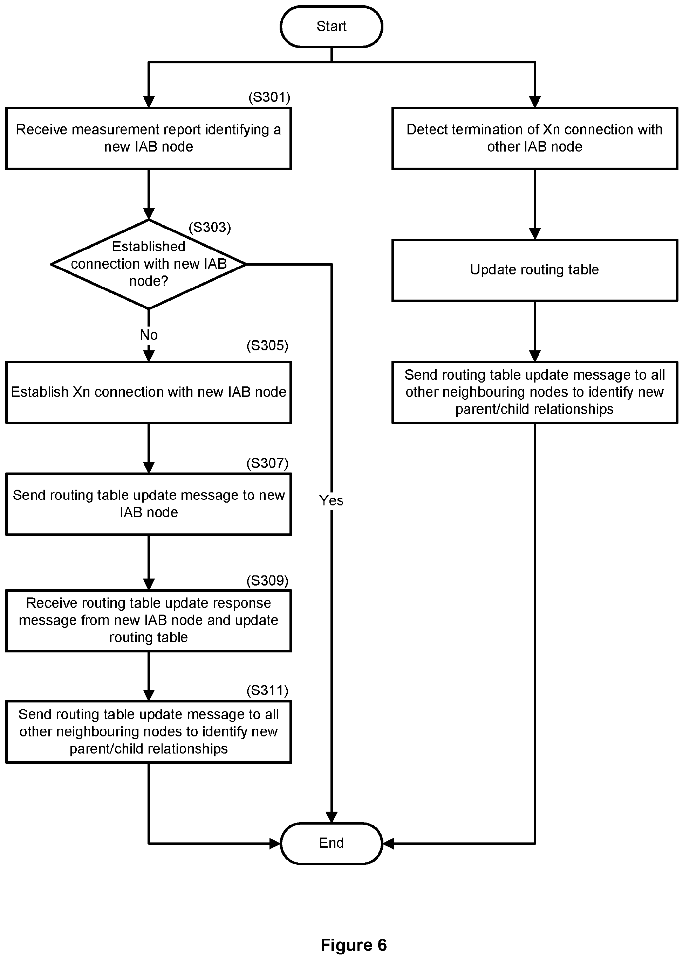

A process of updating the routing table will now be described with reference to Figures 1, 5 and 6.

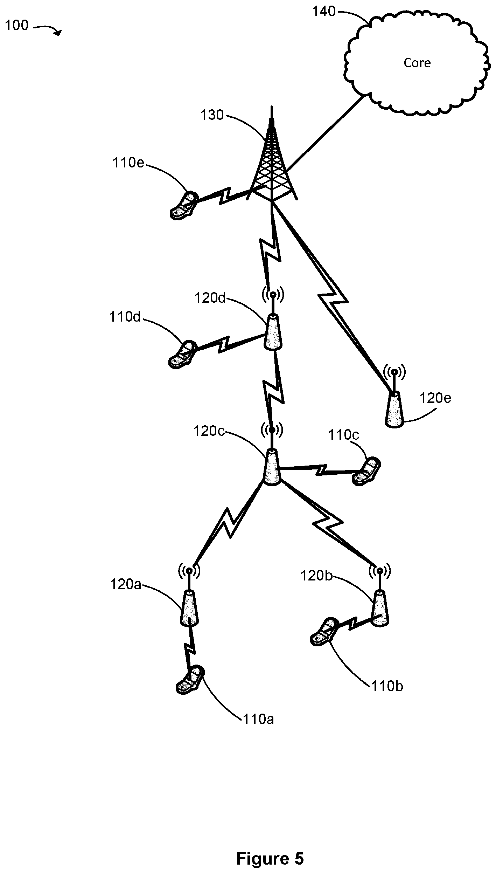

The cellular telecommunications network 100 is initially in the state as shown in Figure 1. At a subsequent time, a fifth IAB node 120e is added to the network and is connected directly to the donor lAB 130 as shown in Figure 5. The third UE 110c (connected to the third lAB node 120c) is within the coverage area of the fifth IAB node 120e. In a first step of this routing table update process (S301), the third IAB node 120c receives a measurement report from the third UE 110c identifying the fifth IAB node 120e. In step S303, the third IAB node 120c determines whether or not it has an established Xn connection with the fifth IAB node 120e by consulting its routing table. In this example, the third IAB node 120c and fifth IAB node 120e do not have an established Xn connection. In response, the third IAB node 120c begins an Xn connection establishment process with the fifth IAB node 120e (step S305). Once established, the third IAB node 120c has identified the fifth IAB node 120e and has received the fifth IAB node's IP address. Similarly, the fifth IAB node 120e has identified the third IAB node 120c and has received the third IAB node's IP address.

In step S307, the third IAB node 120c sends a routing table update message (encapsulated in an Xn message) to the fifth IAB node 120e. This routing table update message identifies the parent node for the third IAB node 120c (in this example, the fourth lAB node 120d) and all child nodes for the third IAB node 120c (in this example, the first and second IAB nodes 120a, 120b).

On receipt, the fifth IAB node 120e stores this data in its routing table. Accordingly, the fifth IAB node's routing table includes the following data:

**Table 3: Routing table for the fifth IAB node 120e**

| **Neighbouring Node** | **IP Address of Neighbouring Node** | **Parent Node of Neighbouring Node** | **Child Node(s) of Neighbouring Node** |
|---|---|---|---|
| IAB donor 130 | IP₁₃₀ | NULL | Fourth IAB node 120d; |
| | | | Fifth IAB node 120e |
| Third IAB node 120c | IP_{120c} | Fourth IAB node 120d | First IAB node 120a; |
| | | | Second IAB node 120b |

The fifth IAB node 120e also sends a routing table update response message (encapsulated in an Xn message) to the third IAB node 120c, identifying the parent node for the fifth IAB node 120e and all child nodes for the fifth IAB node 120e. In this example, the donor lAB 130 is the parent node of the fifth IAB node 120e and there are no child nodes for the fifth IAB node 120e. On receipt, in step S309, the third IAB node 130c stores this data in its routing table. Accordingly, the third IAB node's routing table includes the following data:

**Table 4: Routing table of the third IAB node 120c**

| **Neighbouring Node** | **IP Address of Neighbouring Node** | **Parent Node of Neighbouring Node** | **Child Node(s) of Neighbouring Node** |
|---|---|---|---|
| First IAB node 120a | IP₁₂₀ₐ | Third IAB node 120c | NULL |
| Second IAB node 120b | IP_{120b} | Third IAB node 120c | NULL |
| Fourth IAB node 120d | IP_{120d} | IAB donor 130 | Third IAB node 120c |
| Fifth IAB node 120e | IP₁₂₀ₑ | IAB donor 130 | |

Furthermore, in step S311, the fifth IAB node 120e sends a routing table update message (encapsulated in an Xn message) to all other neighbouring nodes identified in its routing table to identify any new parent/child relationships. There are no new relationships in this example so no such message is required.

The above process provides a mechanism for the routing tables to be updated with information on a newly added IAB node, so that the newly added IAB node may be utilised in the message transport process. Additionally, the process provides for updating routing tables following termination of an Xn connection between IAB nodes from the network (e.g. if an IAB node is removed from the network, powered down, or the Xn connection is otherwise lost). Following detection of a termination, the detecting node sends a message to all other nodes identified in its routing table to inform the other nodes of the termination. The other nodes may then update their routing tables.

In the above embodiment, the inter-base station connections are Xn connections. However, this is non-essential and the above embodiment applies to other forms of inter-AP messages, such as X2 or S1.

## Claims

1. A method of operating an Access Point, AP, (120c) in a cellular telecommunications network (100), the cellular telecommunications network (100) having a plurality of APs (120) and a core network (140), wherein the AP (120c) is connected to a first subset of the plurality of APs (120) via a wireless upstream connection towards the core network (140) and is further connected to a second subset of the plurality of APs (120) via a wireless downstream connection away from the core network (140), the method comprising the steps of:
receiving an inter-AP message in a first wireless communication from a first AP (120a) of the second subset of the plurality of APs (120), the inter-AP message comprising a destination identifier; and
identifying a second AP (120b) based on the destination identifier of the inter-AP message; **characterised in that**:
the second AP (120b) is a member of the second subset of the plurality of APs (120); and the method is **characterised by**:
sending the inter-AP message to the second AP (120b) of the second subset of the plurality of APs (120) in a second wireless communication via the wireless downstream connection.

2. A method as claimed in Claim 1, wherein the second AP (120b) is the destination of the inter-AP message.

3. A method as claimed in Claim 1, wherein the destination of the inter-AP message is a first neighbour of the second AP.

4. A method as claimed in Claim 3, further comprising the initial steps of:
discovering the second AP;
identifying the first neighbour of the second AP;
recording an association between the second AP and the first neighbour of the second AP,
wherein the step of identifying the second AP based on the destination of the inter-AP message utilises the recorded association between the second AP and the first neighbour of the second AP.

5. A method as claimed in any one of the preceding claims, further comprising the steps of:
detecting a termination of an inter-AP connection between the second AP and a second neighbour of the second AP; and
responsive to the detection, updating a recorded association between the second AP and the second neighbour of the second AP.

6. A computer program comprising instructions which, when the program is executed by a computer, cause the computer to carry out the steps of any one of Claims 1 to 5.

7. A computer readable carrier medium comprising the computer program of Claim 6.

8. An Access Point, AP (120c), in a cellular telecommunications network (100) having a transceiver, memory and a processor configured to cooperate to carry out the steps of any one of Claims 1 to 5.

## Patentansprüche

1. Verfahren zum Betreiben eines Zugangspunkts, AP, (120c) in einem zellularen Telekommunikationsnetzwerk (100), wobei das zellulare Telekommunikationsnetzwerk (100) mehrere APs (120) und ein Kernnetzwerk (140) aufweist, wobei der AP (120c) über eine drahtlose Upstream-Verbindung hin zu dem Kernnetzwerk (140) mit einer ersten Teilmenge der mehreren APs (120) verbunden ist und ferner über eine drahtlose Downstream-Verbindung weg von dem Kernnetzwerk (140) mit einer zweiten Teilmenge der mehreren APs (120) verbunden ist, wobei das Verfahren die folgenden Schritte umfasst:
Empfangen einer Inter-AP-Nachricht in einer ersten Drahtloskommunikation von einem ersten AP (120a) der zweiten Teilmenge der mehreren APs (120), wobei die Inter-AP-Nachricht eine Zielkennung umfasst; und
Identifizieren eines zweiten AP (120b) basierend auf der Zielkennung der Inter-AP-Nachricht; **dadurch gekennzeichnet, dass**:
der zweite AP (120b) ein Mitglied der zweiten Teilmenge der mehreren APs (120) ist; und das Verfahren **gekennzeichnet ist durch**:
Senden der Inter-AP-Nachricht an den zweiten AP (120b) der zweiten Teilmenge der mehreren APs (120) in einer zweiten Drahtloskommunikation über die drahtlose Downstream-Verbindung.

2. Verfahren nach Anspruch 1, wobei der zweite AP (120b) das Ziel der Inter-AP-Nachricht ist.

3. Verfahren nach Anspruch 1, wobei das Ziel der Inter-AP-Nachricht ein erster Nachbar des zweiten AP ist.

4. Verfahren nach Anspruch 3, das ferner die folgenden Anfangsschritte umfasst:
Ermitteln des zweiten AP;
Identifizieren des ersten Nachbarn des zweiten AP;
Aufzeichnen einer Assoziation zwischen dem zweiten AP und dem ersten Nachbarn des zweiten AP,
wobei der Schritt des Identifizierens des zweiten AP basierend auf dem Ziel der Inter-AP-Nachricht die aufgezeichnete Assoziation zwischen dem zweiten AP und dem ersten Nachbarn des zweiten AP nutzt.

5. Verfahren nach einem der vorhergehenden Ansprüche, das ferner die folgenden Schritte umfasst:
Detektieren einer Beendigung einer Inter-AP-Verbindung zwischen dem zweiten AP und einem zweiten Nachbarn des zweiten AP; und
als Reaktion auf die Detektion, Aktualisieren einer aufgezeichneten Assoziation zwischen dem zweiten AP und dem zweiten Nachbarn des zweiten AP.

6. Computerprogramm, das Anweisungen umfasst, die, wenn das Programm durch einen Computer ausgeführt wird, den Computer veranlassen, die Schritte nach einem der Ansprüche 1 bis 5 durchzuführen.

7. Computerlesbares Trägermedium, das das Computerprogramm nach Anspruch 6 umfasst.

8. Zugangspunkt, AP (120c), in einem zellularen Telekommunikationsnetzwerk (100), das einen Sendeempfänger, einen Speicher und einen Prozessor aufweist, die dazu ausgelegt sind, zusammenzuarbeiten, um die Schritte nach einem der Ansprüche 1 bis 5 durchzuführen.

## Revendications

1. Procédé d'exploitation d'un point d'accès, AP, (120c) dans un réseau de télécommunications cellulaire (100), le réseau de télécommunications cellulaire (100) présentant une pluralité d'AP (120) et un réseau central (140), dans lequel l'AP (120c) est connecté à un premier sous-ensemble de la pluralité d'AP (120) par l'intermédiaire d'une connexion amont sans fil vers le réseau central (140) et est connecté en outre à un second sous-ensemble de la pluralité d'AP (120) par l'intermédiaire d'une connexion aval sans fil partant du réseau central (140), le procédé comprenant les étapes suivantes :
la réception d'un message inter-AP dans une première communication sans fil en provenance d'un premier AP (120a) du second sous-ensemble de la pluralité d'AP (120), le message inter-AP comprenant un identifiant de destination ; et
l'identification d'un deuxième AP (120b) en fonction de l'identifiant de destination du message inter-AP ;
**caractérisé en ce que** :
le deuxième AP (120b) fait partie du second sous-ensemble de la pluralité d'AP (120) ; et le procédé est **caractérisé par** :
l'envoi du message inter-AP au deuxième AP (120b) du second sous-ensemble de la pluralité d'AP (120) dans une deuxième communication sans fil par l'intermédiaire de la connexion aval sans fil.

2. Procédé selon la revendication 1, dans lequel le deuxième AP (120b) est la destination du message inter-AP.

3. Procédé selon la revendication 1, dans lequel la destination du message inter-AP est un premier voisin du deuxième AP.

4. Procédé selon la revendication 3, comprenant en outre les étapes initiales suivantes :
la découverte du deuxième AP ;
l'identification du premier voisin du deuxième AP ;
l'enregistrement d'une association entre le deuxième AP et le premier voisin du deuxième AP,
dans lequel l'étape d'identification du deuxième AP en fonction de la destination du message inter-AP utilise l'association enregistrée entre le deuxième AP et le premier voisin du deuxième AP.

5. Procédé selon l'une quelconque des revendications précédentes, comprenant en outre les étapes suivantes :
la détection d'une terminaison d'une connexion inter-AP entre le deuxième AP et un deuxième voisin du deuxième AP ; et
en réponse à la détection, la mise à jour d'une association enregistrée entre le deuxième AP et le deuxième voisin du deuxième AP.

6. Programme d'ordinateur comprenant des instructions qui, à l'exécution du programme par un ordinateur, amènent l'ordinateur à entreprendre les étapes selon l'une quelconque des revendications 1 à 5.

7. Support porteur lisible par ordinateur comprenant le programme informatique selon la revendication 6.

8. Point d'accès, AP (120c), dans un réseau de télécommunications cellulaire (100) présentant un émetteur-récepteur, une mémoire et un processeur configurés pour coopérer afin d'entreprendre les étapes selon l'une quelconque des revendications 1 à 5.
